# EUROPÄISCHE PATENTANMELDUNG

(11) **EP 2 063 150 A2**
(43) Veröffentlichungstag der Anmeldung: **27.05.2009**
(21) Anmeldenummer: 08018515.0
(22) Anmeldetag: 23.10.2008
(51) Int. Cl.: F16H 7/08

(54) **Spanneinrichtung für einen Nockenwellenantrieb einer Brennkraftmaschine**

(30) Priorität: 22.11.2007 DE 102007056300
(71) Anmelder: Bayerische Motoren Werke Aktiengesellschaft, 80809 München (DE)
(72) Erfinder: Halmanseger, Leonhard, 83059 Kolbermoor (DE)

(57) **Zusammenfassung**

Spanneinrichtung (100) für einen Nockenwellenantrieb einer Brennkraftmaschine, wobei die Brennkraftmaschine eine Kurbelwelle, wenigstens eine Nockenwelle und ein Gehäuse (104) umfasst, wobei der Nockenwellenantrieb ein kurbelwellengetriebenes erstes Antriebsrad, ein der wenigstens einen Nockenwelle zugeordnetes weiteres Antriebsrad und ein Zugmittel zur Zugverbindung der Antriebsräder miteinander umfasst, wobei die Spanneinrichtung (100) eine Spannschiene (102) und einen zwischen Spannschiene (102) und Brennkraftmaschinengehäuse (104) wirksamen Spanner (108,110,112,118,120) umfasst, wobei der Spanner zum Einstellen der wenigstens einen Nockenwelle zur Aufbringung einer statischen definierten Spannkraft geeignet ist.

## Beschreibung

Die Erfindung betrifft eine Spanneinrichtung für einen Nockenwellenantrieb einer Brennkraftmaschine, wobei die Brennkraftmaschine eine Kurbelwelle, wenigstens eine Nockenwelle und ein Gehäuse umfasst, wobei der Nockenwellenantrieb ein kurbelwellengetriebenes erstes Antriebsrad, ein der wenigstens einen Nockenwelle zugeordnetes weiteres Antriebsrad und ein Zugmittel zur Zugverbindung der Antriebsräder miteinander umfasst und wobei die Spanneinrichtung eine Spannschiene und einen zwischen Spannschiene und Brennkraftmaschinengehäuse wirksamen Spanner umfasst.

Derartige Spanneinrichtungen werden zur Vermeidung bzw. Dämpfung von Längs- und Querschwingungen von Steuerketten von Kraftfahrzeug-Brennkraftmaschinen eingesetzt und sind allgemein bekannt, beispielsweise aus der DE 203 04 345 U1.

Zum Spannen wird üblicherweise eine hydraulisch beaufschlagbare Kolben-Zylinder-Anordnung eingesetzt, wobei das Hydraulikmedium mittels einer von der Kurbelwelle der Brennkraftmaschine angetriebenen Pumpe gefördert wird. Wenn sich die Brennkraftmaschine außer Betrieb befindet, ist auch diese Pumpe inaktiv, sodass die Kolben-Zylinder-Anordnung dann keine oder eine nur geringe Spannkraft ausübt. Indem aus der Kolben-Zylinder-Anordnung Hydraulikmedium entweicht, wenn ein Gegendruck aufgebracht wird, kann die Spannkraft darüber hinaus nicht gehalten werden, außerdem ist die Spannkraft undefiniert.

Aufgrund ungenügender Steuerkettenspannung kommt es daher bei der Einstellung der Nockenwellen bei Montage oder Wartung zu Winkelabweichungen, sodass eine genaue Einstellung erschwert oder sogar unmöglich wird. Dies betrifft insbesondere Brennkraftmaschine mit verstellbaren Nockenwellen, bei denen zwischen Nockenwellenantriebsrad und Nocken ein Verstellmechanismus zur Winkelverstellung der Nockenwelle relativen zur Kurbelwelle vorgesehen ist. Die Vorspannkraft einer gegebenenfalls noch vorhandenen Spannfeder reicht nicht aus, um eine exakte Nockenwelleneinstellung zu ermöglichen.

Aufgabe der Erfindung ist es, eine eingangs genannte Spanneinrichtung bereit zu stellen, die eine Spannung des Zugmittels zur exakten Einstellung einer oder mehrerer Nockenwellen bei Montage oder Wartung auch dann ermöglicht, wenn die Brennkraftmaschine außer Betrieb ist.

Die Lösung der Aufgabe erfolgt mit einer Spanneinrichtung mit den Merkmalen des Anspruchs 1, indem der Spanner zum Einstellen der wenigstens einen Nockenwelle zur Aufbringung einer statischen definierten Spannkraft geeignet ist. Mit der erfindungsgemäßen Spanneinrichtung kann die Vorspannkraft genau auf einen vorbestimmten Wert eingestellt werden. Dann kann eine exakte Einstellung der Nockenwelle bzw. der Steuerzeiten bei Montage oder Wartung erfolgen. Mit der Spanneinrichtung können auch Kontrollmessungen durchgeführt werden, da sie reproduzierbare Rahmenbedingungen ermöglicht.

Besonders zu bevorzugende Ausführungen und Weiterbildungen der Erfindung sind Gegenstand der Unteransprüche.

Zur genauen Einstellung einer vorbestimmten Vorspannkraft und um ein spannkraftfreies Anlegen zu ermöglichen ist der Spanner vorzugsweise einstellbar. Außerdem kann die Spanneinrichtung so an unterschiedlichen Brennkraftmaschinen und/oder zur Durchführung unterschiedlicher Montage-Wartung-, oder Kontrollarbeiten verwendet werden.

Einem vorteilhaften Ausführungsbeispiel zufolge weist der Spanner einen brennkraftmaschinengehäuseseitigen Befestigungsbereich, einen spannschienenseitigen Spannbereich und einen zwischen Befestigungsbereich und Spannbereich wirksamen Spannmechanismus auf, wobei der Spannmechanismus eine Spannschraube und ein Hebelement umfasst. Die Spanneinrichtung arbeitet rein mechanisch und vom Betriebszustand der Brennkraftmaschine unabhängig. Die Spannbewegung erfolgt im Inneren der Spanneinrichtung, während an den Kontaktbereichen am Brennkraftmaschinengehäuse und an der Spannschiene eine sichere Abstützung gewährleistet ist. Mittels der Spannschraube ist die erforderliche Vorspannkraft mittels eines üblichen, idealerweise mittels eines ohnehin vorhandenen Werkzeugs einstellbar. Das Hebelelement ermöglicht eine Kraft-Weg-Übersetzung, sodass der Stellbereich der Spannschraube und der Spannbereich aufeinander abgestimmt werden können. Außerdem ermöglicht das Hebelelement eine Bewegungsumlenkung, sodass die Spanneinrichtung bauraummäßig an die Brennkraftmaschine angepasst werden kann.

Bevorzugt ist es, wenn die Spanneinrichtung eine Einrichtung zur vorübergehenden Befestigung am Brennkraftmaschinengehäuse aufweist. Damit kann die Spanneinrichtung zur Einstellung der Nockenwelle(n) bei Montage oder Wartung oder zur Kontrolle der Steuerzeiten vorübergehend am Brennkraftmaschinengehäuse befestigt werden. Nach abgeschlossener Arbeit kann die Spanneinrichtung wieder entfernt werden.

Zweckmäßigerweise ist die Spanneinrichtung mittels einer Befestigungsschraube lösbar mit dem Brennkraftmaschinengehäuse verbindbar. Dabei bietet es sich an, einen solchen Schraubenangriff zu verwenden, der mit einem ohnehin vorhandenen Werkzeug betätigt werden kann, sodass ein gesondertes Werkzeug nicht erforderlich ist. Alternativ kann zur Befestigung der Spanneinrichtung am Brennkraftmaschinengehäuse auch ein mechanischer Spannmechanismus verwendet werden, beispielsweise ein werkzeuglos betätigbarer Klemmmechanismus.

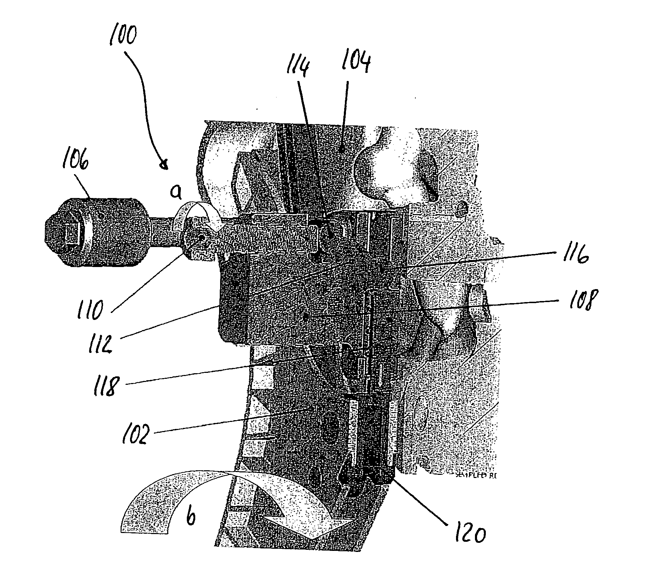

Nachfolgend wird ein besonders zu bevorzugendes Ausführungsbeispiel der Erfindung unter Bezugnahme auf die einzige Figur, die schematisch und beispielhaft eine Spanneinrichtung zur Einstellung von Nockenwellen an einer Brennkraftmaschine zeigt, näher erläutert.

Eine hier nicht näher dargestellte Brennkraftmaschine eines Kraftfahrzeugs umfasst ein Brennkraftmaschinengehäuse 104 und darin angeordnet eine Kurbelwelle sowie Nockenwellen zur Betätigung von Einlass- und Auslassventilen von Zylindern. Die Brennkraftmaschine ist beispielsweise eine Vier- oder Sechszylinder-Reihenbrennkraftmaschine oder eine Acht-, Zehn- oder Zwölfzylinder-V-Brennkraftmaschine.

Kurbelwelle und Nockenwellen weisen endseitig jeweils ein Antriebsrad auf, die Antriebsräder sind mittels eines Zugmittels miteinander verbunden. Das Zugmittel ist vorliegend eine Steuerkette, wobei einem anderen Ausführungsbeispiel zufolge auch ein Steuerriemen verwendet werden kann. Ausgehend von der Kurbelwelle werden mittels des Zugmittels beim Betrieb der Brennkraftmaschine die Nockenwellen angetrieben.

Die Nockenwellen nehmen dabei zur Kurbelwelle jeweils eine vorbestimmte Drehwinkelstellung ein, sodass die Ventile der Brennkraftmaschine zu vorbestimmten Steuerzeiten öffnen bzw. schließen. Die Steuerzeiten hängen von der relative Drehwinkelstellung der Nockenwellen zur Kurbelwelle ab und müssen bei Montage oder Wartung exakt eingestellt werden. Einlass- und/oder Auslassnockenwellen der Brennkraftmaschine verfügen vorliegend über eine Verstelleinrichtung zur gesteuerten/geregelten Verstellung der Steuerzeiten während des Betriebs der Brennkraftmaschine.

Um die Steuerzeiten exakt einstellen zu können, ist eine vorbestimmte Spannung des Zugmittels erforderlich. Mit Spanneinrichtung 100 kann das Zugmittel statischen und definierten gespannt werden.

Die Spanneinrichtung 100 wird zu Montage-, Wartungs- oder Kontrollzwecken vorübergehend anstelle einer beim üblichen Betrieb der Brennkraftmaschine verwendeten Spanneinrichtung verwendet. Die Spanneinrichtung 100 ist in einem Zugmittelsschacht der Brennkraftmaschine angeordnet.

Die Spanneinrichtung 100 weist einen Befestigungsbereich 108 zur Befestigung am Brennkraftmaschinengehäuse auf. Der Befestigungsbereich 108 umfasst eine Gewindebohrung, in der eine Spannschraube 110 eingeschraubt ist. Dabei bietet es sich an, einen solchen Schraubenangriff für die Spannschraube 110 zu verwenden, der mit einem ohnehin vorhandenen Werkzeug betätigt werden kann, sodass ein gesondertes Werkzeug nicht erforderlich ist. Vorliegend ist die Spannschraube 110 eine Innensechskantschraube.

Ein Hebelelement 112 stützt sich beweglich am Befestigungsbereich 108 ab und umfasst einen Kontaktbereich 114, der mit dem Fuß der Spannschraube 110 zusammenwirkt. Ein weiterer Kontaktbereich 116 des Hebelelements 112 wirkt mit einem stiftförmigen Druckelement 118 zusammen, das die Hebelbewegung auf eine Spannschiene 102 überträgt. Der Befestigungsbereich 108 und der Kontaktbereich 116 sind in Bewegungsrichtung ballig ausgeführt.

Zur Kraft-/Bewegungsübertragung auf die Spannschiene 102 ist ein mechanisch höher belastbares Element 120 vorgesehen. Beispielsweise besteht die Spannschiene 102 besteht Kunststoff und das Element 120 aus Metall. Das Element 120 ist mittels einer Hinterschnittkontur formschlüssig lage- und verdrehgesichert mit der Spannschiene 102 verbunden. Vorliegend weist das Element 120 auf zwei Seite je zwei rund konturierte Vorsprünge auf, die in entsprechenden Ausnehmungen in der Spannschiene 102 einsitzen. Die Spannschiene 102 liegt am Zugmittel an.

Zur Montage-, Wartungs- oder Kontrollzwecken wird die Spanneinrichtung 100 vorübergehend anstelle einer beim üblichen Betrieb der Brennkraftmaschine verwendeten Spanneinrichtung mittels einer Befestigungsschraube 106 mit dem Brennkraftmaschinengehäuse 104 verbunden. Dabei bietet es sich an, für die Befestigungsschraube 106 einen solchen Schraubenangriff zu verwenden, der mit einem ohnehin vorhandenen Werkzeug betätigt werden kann, sodass ein gesondertes Werkzeug nicht erforderlich ist. Vorliegend ist die Befestigungsschraube 106 eine Außensechskantschraube.

Durch Drehen der Spannschraube 110 in Pfeilrichtung a wird die Spannschraube 110 in den Befestigungsbereich 108, der sich am Brennkraftmaschinengehäuse 104 abstützt, hineingeschraubt und drückt gegen den Kontaktbereich 114 des Hebelelements 112. Das Hebelelement 112 bewegt sich entsprechend und drückt mit seinem Kontaktbereich 116 das Druckelement 118 entsprechend der Pfeilrichtung nach unten, sodass die Spannschiene 102 in Pfeilrichtung b bewegt wird und das Zugmittel spannt.

Durch entsprechende Einstellung an der Spannschraube 110 kann die Zugmittelspannung genau auf einen vorbestimmten Wert eingestellt werden. Dann kann eine exakte Einstellung der Nockenwelle bzw. der Steuerzeiten bei Montage oder Wartung erfolgen. Mit der Spanneinrichtung können auch Kontrollmessungen durchgeführt werden, da sie reproduzierbare Rahmenbedingungen ermöglicht. Bei der vorliegenden Ausführung der Erfindung wird die erforderliche Zugmittelspannung bei einem Anzugsmoment der Spannschraube 110 von 0,3-1 Nm, insbesondere von ca. 0,6 Nm erreicht.

Nach erfolgter Einstellung der Nockenwelle bzw. der Steuerzeiten wird die erfindungsgemäße Spanneinrichtung 100 entfernt und eine Betriebsspanneinrichtung montiert.

## Patentansprüche

1. Spanneinrichtung (100) für einen Nockenwellenantrieb einer Brennkraftmaschine,
- wobei die Brennkraftmaschine eine Kurbelwelle, wenigstens eine Nockenwelle und ein Gehäuse (104) umfasst,
- wobei der Nockenwellenantrieb ein kurbelwellengetriebenes erstes Antriebsrad, ein der wenigstens einen Nockenwelle zugeordnetes weiteres Antriebsrad und ein Zugmittel zur Zugverbindung der Antriebsräder miteinander umfasst,
- wobei die Spanneinrichtung (100) eine Spannschiene (102) und einen zwischen Spannschiene (102) und Brennkraftmaschinengehäuse (104) wirksamen Spanner (108, 110, 112, 118, 120) umfasst,
**dadurch gekennzeichnet, dass** der Spanner (108, 110, 112, 118, 120) zum Einstellen der wenigstens einen Nockenwelle zur Aufbringung einer statischen definierten Spannkraft geeignet ist.

2. Spanneinrichtung (100) nach Anspruch 1, **dadurch gekennzeichnet, dass** der Spanner (108, 110, 112, 118, 120) einstellbar ist.

3. Spanneinrichtung (100) nach einem der vorhergehenden Ansprüche, **dadurch gekennzeichnet, dass** der Spanner (108, 110, 112, 118, 120) einen brennkraftmaschinengehäuseseitigen Befestigungsbereich (108), einen spannschienenseitigen Spannbereich (120) und einen zwischen Befestigungsbereich (108) und Spannbereich (120) wirksamen Spannmechanismus (110, 112, 118) aufweist.

4. Spanneinrichtung (100) nach einem der vorhergehenden Ansprüche, **dadurch gekennzeichnet, dass** der Spannmechanismus (110, 112, 118) eine Spannschraube (110) und ein Hebelement (112) umfasst.

5. Spanneinrichtung (100) nach einem der vorhergehenden Ansprüche, **gekennzeichnet durch** eine Einrichtung (106, 108) zur vorübergehenden Befestigung am Brennkraftmaschinengehäuse (104).

6. Spanneinrichtung (100) nach einem der vorhergehenden Ansprüche, **dadurch gekennzeichnet, dass** die Spanneinrichtung (100) mittels einer Befestigungsschraube (106) lösbar mit dem Brennkraftmaschinengehäuse (104) verbindbar ist.
